# EUROPÄISCHE PATENTSCHRIFT

(11) **EP 1 676 737 B1**
(45) Veröffentlichungstag und Bekanntmachung des Hinweises auf die Patenterteilung: **24.10.2007**
(21) Anmeldenummer: 05024956.4
(22) Anmeldetag: 15.11.2005
(51) Int. Cl.: B60J 7/14, B60J 7/12, B60J 7/20

(54) **Mehrteiliges Dach für Fahrzeuge mit offenem Aufbau**
Roof in multiple parts for vehicles with an open body
Toit en plusieurs parties pour véhicules à carrosserie ouverte

(30) Priorität: 30.12.2004 DE 102004063781
(43) Veröffentlichungstag der Anmeldung: 05.07.2006
(60) Teilanmeldung: 07002578.8
(73) Patentinhaber: CTS Fahrzeug-Dachsysteme GmbH, 74321 Bietigheim-Bissingen (DE)
(72) Erfinder: Papendorf, Markus, 74354 Besigheim (DE); Bruder, Gernot, Dr., 76131 Karlsruhe (DE); Röder, Holger, 73054 Eislingen (DE)
(74) Vertreter: Wittner, Walter

(56) Entgegenhaltungen:
- DE-A1- 10 042 460
- DE-A1- 10 108 493
- DE-A1- 10 117 767
- DE-A1- 10 258 053
- DE-A1- 10 316 027
- FR-A- 2 834 949
- US-A1- 2003 230 907
- US-A1- 2004 145 210
- US-A1- 2004 189 039

## Beschreibung

Die Erfindung betrifft ein mehrteiliges Dach für Fahrzeuge mit offenem Aufbau gemäß dem Oberbegriff des Anspruches 1.

Mehrteilige Dächer für Fahrzeuge sind in vielfältigen Ausgestaltungen bekannt, wobei aus Sicht des Nutzers meist nur zwischen Hardtops, also Hartschalendächern, oder Softtops im Sinne von Faltdächern mit flexiblem Verdeckbezug gesprochen wird. Es gibt aber auch viele Mischformen, so beispielsweise Dächer, die lediglich bereichsweise eine formsteife oder eine flexible Dachhaut aufweisen, oder Dächer, bei denen ein flexibler Verdeckbezug teilweise in Überdeckung zu einer formsteifen Dachschale vorgesehen ist.

Ungeachtet der ausgehend von der Dachabdeckung gegebenen Unterschiede finden für Hardtops und Softtops teilweise gleiche Trag- und Faltprinzipien Verwendung, und es sind dementsprechend auch häufig zumindest im grundsätzlichen Aufbau bei gleichen oder vergleichbaren Faltprinzipien einander entsprechende Dachkinematiken vorgesehen. Dies gilt für zwei- oder dreiteilige Dächer wie auch für Dächer mit noch weitergehenderer Unterteilung, wobei grundsätzliches Ziel bei nahezu allen Konstruktionen ist, für das jeweilige Dach eine Ablagestellung zu finden, die die Nutzraumverhältnisse des Fahrzeuges möglichst wenig beeinträchtigt, so beispielsweise bei Hardtops durch Aufteilung der Dachteile auf verschiedene Ablagebereiche oder bei Hard- und Softtops durch entsprechende Paketbildung für die Dachteile.

Ein mehrteiliges Dach gemäß dem Oberbegriff des Anspruches 1 ist aus der DE 102 58 053 A1 in Berücksichtigung der in dieser angesprochenen DE 101 08 493 A1 bekannt.

Aus jeder dieser Druckschriften ist ein dreiteiliges, zu öffnendes Dach für Fahrzeuge bekannt, das über eine Dachkinematik mit einander anschließenden Viergelenken tragend und verstellbar gegen die Karosserie abgestützt ist und dessen über die Viergelenke gegeneinander verstellbare Dachteile bei geöffnetem Dach ein Dachteilpaket bilden. In diesem Dachteilpaket überlagert bei gleichsinniger Ausrichtung mit nach oben zeigender Dachhaut das Vorderteil des Daches dessen Mittelteil, und es liegt das Mittelteil in Überdeckung zum bei abgelegtem Dach in Rückenlage befindlichem Heckteil. Die zwischen dem Dach und der Karosserie sich erstreckenden Lenker des die Dachkinematik mit der Karosserie verbindenden Viergelenks sind dachseitig an dem Mittelteil angelenkt, und es trägt von diesen Lenkern der hintere Lenker das Heckteil.

Diese beiden das Dach mit der Karosserie verbindenden Lenker bezüglich ihrer karosserieseitigen Anlenkpunkte nicht lagefest gemäß der DE 102 58 053 A1 anzuordnen, sondern zueinander verlagerbar anzulenken, ergibt sich aus der DE 101 08 493 A1. Diese sieht im Übrigen eine Antriebsverbindung des vorderen und des hinteren Lenkers dieses Viergelenks vor, bei der der hintere Lenker über eine Lenkeranordnung mit sich kreuzenden Lenkern angetrieben und zur Karosserie in einem lagefesten Anlenkpunkt angelenkt ist. Für den vorderen Lenker ist hingegen eine zur Karosserie lageveränderliche Anlenkung vorgesehen.

Eine solche Ausgestaltung zielt darauf ab, durch die Art der Paketbildung für das geöffnete Dach zu einer hinsichtlich des Raumbedarfs in der Ablagestellung optimierten Lösung zu kommen. Dies auch hinsichtlich des Ablagevorganges, um Beeinträchtigungen des Insassenraumes und/oder Überschneidungen zu karosserieseitig gewünschten Gestaltungsformen zu vermeiden. Vor allem sollen auch die Durchgangswege für das Dach zum jeweiligen Ablageraum, sei es als separater Verdeckkasten oder als Kofferraum, gering gehalten werden. Dies bei günstigen Belastungsverhältnissen insbesondere in den mit den Stellkräften beaufschlagten Gelenken und Anlenkpunkten der Dachkinematik.

Aus der DE 103 16 027 A1 ist des Weiteren ein mehrteiliges Dach für Fahrzeuge mit offenem Aufbau bekannt, bei dem die untereinander über Viergelenke tragend verbundenen Dachteile über zwischen diesen angeordnete Vorgelege antriebsverbunden sind. Dies bezogen auf einen Dachaufbau, bei dem die Dachteile bei geöffnetem Dach zu einem Dachpaket zusammengelegt sind, bei dem, bei gleicher Ausrichtung der Dachteile mit nach oben weisender Dachhaut, das vordere Dachteil über das mittlere und das hintere Dachteil über das vordere eingeschwenkt sind und das Dach insgesamt über eine zwischen dem mittleren Dachteil und der Karosserie angelenkte Viergelenkkinematik getragen ist.

Durch die Erfindung sollen für ein mehrteiliges Dach der eingangs genannten Art weiter verbesserte Verhältnisse insbesondere hinsichtlich des Stellkraftbedarfes und des Platzbedarfes bei Ablage des Daches erreicht werden.

Erreicht wird dies mit den Merkmalen des Anspruches 1, wobei es durch die Gestaltung der Antriebsverbindung zwischen dem dritten und dem zweiten Viergelenk, also zwischen mittlerem und vorderem Dachteil als Fünfgelenk-Vorgelege und die zur Karosserie lageveränderliche Anlenkung des dem Heckteil zugeordneten hinteren Lenkers als C-Säulenlenker möglich wird, das bei geöffnetem Dach gebildete Dachpaket sowohl in der Länge wie auch in der Höhe besonders dicht zu packen und zugleich auch den Raumbedarf für das Dachpaket bei Verstellung des Daches in dessen Ablagestellung zu reduzieren.

Weitere Einzelheiten und Merkmale der Erfindung ergeben sich aus den Ansprüchen und der nachfolgenden Zeichnungsbeschreibung. Es zeigen:
- Fig. 1: die Dachkinematik eines dreiteiligen Hardtops für Fahrzeuge mit offenem Aufbau in der der Schließstellung des Daches entsprechenden Lage, wobei die in spiegelbildlicher Anordnung den beiden Längsseiten des Fahrzeuges zugeordnete Kinematik in einer schematisierten Darstellung veranschaulicht ist, zunächst unter Verzicht auf die Darstellung der für die Verstellung einer Heckscheibe sowie einer Hutablage dienenden Kinematikteile, in einer Gesamtdarstellung,
- Fig. 2: eine der Fig. 1 entsprechende Stellung der Dachkinematik in vergrößerter und aufgelöster Darstellung,
- Fig. 3: die Dachkinematik gemäß Fig. 1 und 2 in einer Zwischenstellung zwischen Schließ- und Ablagestellung des Daches, wiederum aufgelöst dargestellt,
- Fig. 4: die Dachkinematik gemäß Fig. 1 bis 3 in Ablagestellung des Daches,
- Fig. 5: in einer der Fig. 2 entsprechenden aufgelösten Darstellung die Dachkinematik gemäß Fig. 1 bis 4, ergänzt um die Kinematikteile für die Heckscheibe und die Hutablage, wobei Fig. 5 wiederum die Schließstellung des Daches zeigt,
- Fig. 6: in einer der Fig. 3 entsprechenden Zwischenstellung des Daches die ergänzte Dachkinematik gemäß Fig. 5,
- Fig. 7: eine Ausschnittsvergrößerung des zentralen Teiles der Dachkinematik gemäß Fig. 6,
- Fig. 8: eine der Ablagestellung des Daches gemäß Fig. 4 entsprechende Darstellung der um die Kinematik für die Heckscheibe und die Hutablage ergänzten Kinematik, wobei die Hutablage ihre angehobene Öffnungslage zur Überführung des Daches in seine Ablagestellung im Heck des Fahrzeuges einnimmt,
- Fig. 9: eine vergrößerte Darstellung des zentralen Teiles der Kinematik in einer der Fig. 8 entsprechenden Darstellung,
- Fig. 10: in einer der schließlage des Daches gemäß Fig. 4 entsprechenden Darstellung die um die Kinematik für Heckscheibe und Hutablage ergänzte Dachkinematik, wobei die Hutablage ihre den Ablageraum für das Dach zumindest teilweise überdeckende Stellung einnimmt und die Heckscheibe, wie schon in den Darstellungen gemäß Fig. 8 ff. ihre gegenüber dem unter das Mittelteil eingeklappten Heckteil gegen das Mittelteil angehobene Stellung einnimmt, und
- Fig. 11: wiederum eine vergrößerte Darstellung des zentralen Bereiches der Kinematik.

Das beispielsweise und schematisiert dargestellte, als dreiteiliges Hardtop ausgebildete Dach erstreckt sich geschlossen zwischen Heckdeckel und Windlauf des Fahrzeuges und ist geöffnet in einer heckseitigen Ablage zu verstauen.

Die zugehörige Dachkinematik ist zur Fahraeuglängsmittelebene symmetrisch aufgebaut und mit den Dachteilen 1 - 3, die in den Zeichnungen durch ihre Trägerteile symbolisiert sind, verbunden.

In der Offenstellung des Daches, also bei abgelegtem Dach, ist das Vorderteil 1 unter Beibehalt seiner Ausrichtung über das Mittelteil 2 geschwenkt und das Heckteil 3 liegt in Rückenlage unterhalb des Mittelteiles 2.

Das Heckteil 3 ist in seinem Längsmittelbereich durch eine Heckscheibe 40 gebildet, die gegenüber den seitlichen C-Säulen bei in Ablagestellung befindlichem Heckteil 3 in Richtung auf das Mittelteil 2 verstellbar ist.

Die Dachkinematik ist, bezogen auf die Längserstreckung des Fahrzeuges, über längsseitliche, lagefeste Konsolen 5 getragen und erstreckt sich ausgehend von den Konsolen 5 in Schließstellung des Daches im Wesentlichen längs der Dachteile 1 - 3. Grundsätzlich liegt es auch im Rahmen der Erfindung, die Konsolen 5 selbst in bekannter Weise zur Karosserie verstellbar zu machen, sodass sich weitere Übergangsstellungen realisieren lassen, so beispielsweise eine zur Ablagestellung durch Verstellen der Konsole 5 angehobene Beladestellung.

Im Einzelnen umfasst die Dachkinematik, jeweils bezogen auf eine Fahrzeuglängsseite, einen dem Heckteil 3 zugeordneten C-Säulenlenker 6 als Bestandteil eines ersten Viergelenks. Der C-Säulenlenker ist mit der Konsole 5 über einen Zwischenlenker 9 in Anlenkpunkten 7 und 8 verbunden. Angelenkt an der Konsole 5 in einem Anlenkpunkt 10 ist ferner ein Hauptlenker 11 als vorderer Lenker des ersten Viergelenkes. Der C-Säulenlenker 6 ist, bezogen auf das geschlossene Dach, im rückwärtigen Endbereich des Mittelteiles 2 mit diesem im Anlenkpunkt 12 verbunden, der Anlenkpunkt 13 des Hauptlenkers 11 ist in Fahrtrichtung F versetzt am Mittelteil 2 vorgesehen.

Nahe dem Anlenkpunkt 13 und entgegen der Fahrtrichtung F versetzt ist am Hauptlenker 11 in einen Anlenkpunkt 14 ein Stelllenker 15 - als Bestandteil eines dritten Viergelenkes - angelenkt, der über ein Vorgelege 16 das Vorderteil 1 beaufschlagt, das über Lenker 17 und 18 - als Bestandteile eines zweiten Viergelenkes - mit dem Mittelteil 2 verbunden ist. Der Lenker 17 ist in einem frontseitigen Anlenkpunkt 19 und der Lenker 18 in einem rückwärtigen Anlenkpunkt 20 am Vorderteil 1 angelenkt. Die Anlenkpunkte am Mittelteil 2 sind für den Lenker 17 mit 21 und für den Lenker 18 mit 22 bezeichnet, wobei der Anlenkpunkt 21 in Fahrtrichtung F vor dem Anlenkpunkt 22 und höhenversetzt zu diesem liegt. Bevorzugt liegt der Anlenkpunkt 22 nahe der oberen Begrenzung des Mittelteils 2, insbesondere in einer nach oben gerichteten Ausformung desselben.

Das als Vorgelege 16 vorgesehene Fünfgelenk umfasst einen am Mittelteil 2 im Anlenkpunkt 23 - benachbart zum Anlenkpunkt 22 des Lenkers 18 - angelenkten Führungslenker 24, der zum Stelllenker 15 einen bezogen auf das geschlossene Dach schräg nach hinten unten versetzten Anlenkpunkt 81 aufweist und zu dem überkreuzend ein Anschlusslenker 25 vorgesehen ist, der zum Stelllenker 15 einen Anlenkpunkt 26 und zum im Anlenkpunkt 22 mit dem Mittelteil 2 verbundenen Lenker 18 einen Anlenkpunkt 27 aufweist.

Das Heckteil 3 ist bezüglich seines in Verbindung zur karosseriefesten Konsole 5 liegenden Anlenkpunktes 7 lageveränderlich, und durch die Verschwenkung des Zwischenlenkers 9 ist der C-Säulenlenker 6 in Längsrichtung des Fahrzeuges bei Verschwenkung des Daches zwischen Schließ- und Öffnungsstellung verlagerbar, sodass sich für das Dach bei der Ablage und bei der Überführung in die Ablagestellung ein in Fahrzeuglängsrichtung verringerter Raumbedarf erreichen lässt. Gesteuert ist der Zwischenlenker 9 in seiner Schwenkbewegung um seinen der Konsole 5 zugeordneten Anlenkpunkt 8 über einen Steuerlenker 28, der in einem Anlenkpunkt 29 am Hauptlenker 11 angelenkt ist.

Auf den Hauptlenker 11 wirkt der Verstellantrieb für die Dachkinematik, der durch einen gegen die Konsole 5 abgestützten Linearantrieb in Form eines Stellzylinders 31 gebildet ist, der einen Umlenker 32 beaufschlagt und in einem Anlenkpunkt 33 mit dem Umlenker 32 verbunden ist. Der Umlenker 32 ist über eine Viergelenkführung mit der Konsole 5 verbunden, die Lenker 34 und 35 unterschiedlicher Länge umfasst, von denen der längere Lenker 34 in einem Anlenkpunkt 36 und der kürzere Lenker 35 im Anlenkpunkt 10 des Hauptlenkers 11 mit der Konsole 5 verbunden ist. Anstelle einer zusammenfallenden Anlenkung zur Konsole 5 in einem Anlenkpunkt 10 können der Lenker 35 und der Hauptlenker 11 auch in separaten Anlenkpunkten an der Konsole 5 angelenkt sein.

Der Umlenker 32 weist des Weiteren einen Anlenkpunkt 37 zu einem Stelllenker 38 auf, der in einem Anlenkpunkt 39 mit dem Hauptlenker 11 verbunden ist, sodass die über den Umlenker 32 führende Antriebsverbindung des Stellzylinders 31 zum Hauptlenker 11 geschlossen ist. Verstellbewegungen des Stellzylinders 31 führen somit zu Schwenkbewegungen des Hauptlenkers 11 und ausgehend vom Hauptlenker 11 über den Steuerlenker 28 zur Verschwenkung des Zwischenlenkers 9 und damit zu verlagerungen des über den Zwischenlenkern 9 mit der Konsole 5 verbundenen Anlenkpunktes 7 des C-Säulenlenkers 6. Von den Anlenkungen der Lenker 34 und 35 am Umlenker 32 fällt die des längeren, in der Verbindung zur Konsole 5 liegenden Lenkers 34 mit dem Anlenkpunkt 33 des Stellzylinders 31 zusammen, während der Umlenker 32 in einem Anlenkpunkt 80 mit dem Lenker 35 verbunden ist. Die Anlenkpunkte 33, 37 und 80 liegen nahezu in den Eckpunkten eines gleichseitigen Dreiecks, wobei die Anlenkpunkte 33 und 37 bei geschlossenem Dach nahezu in Stellrichtung des Stellzylinders 31 hintereinander und in Flucht zum Stellzylinder 31 liegen, wodurch sich günstige Kraftübertragungsverhältnisse auch in der Übertragung der Stellkräfte auf dem Hauptlenker 11 ergeben.

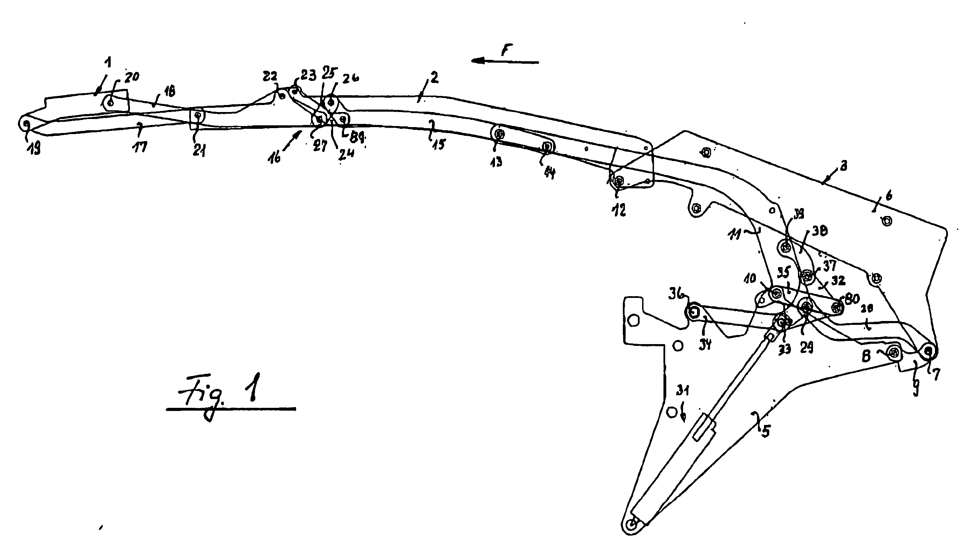

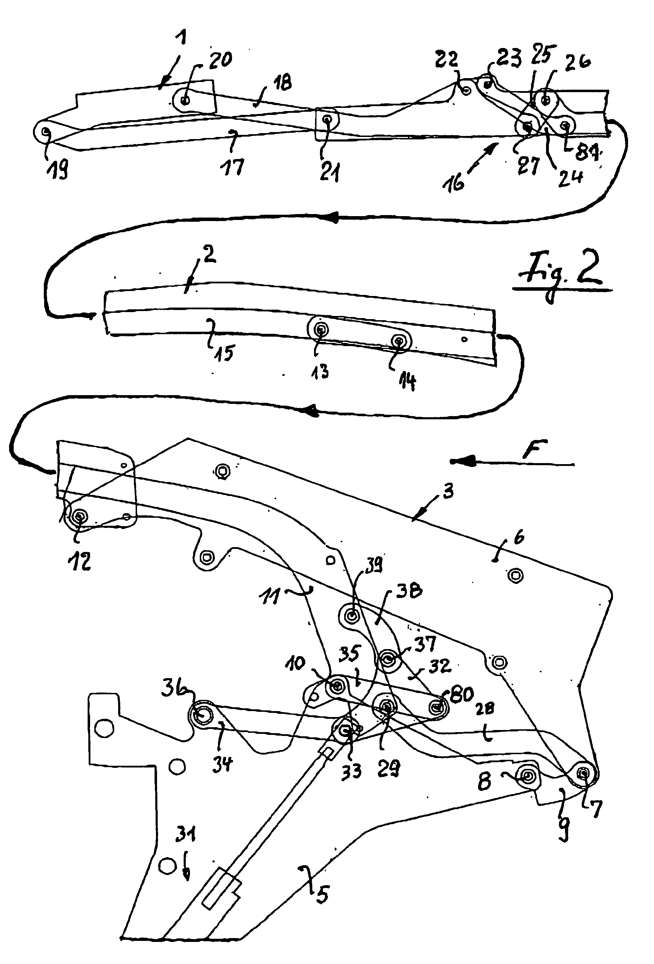

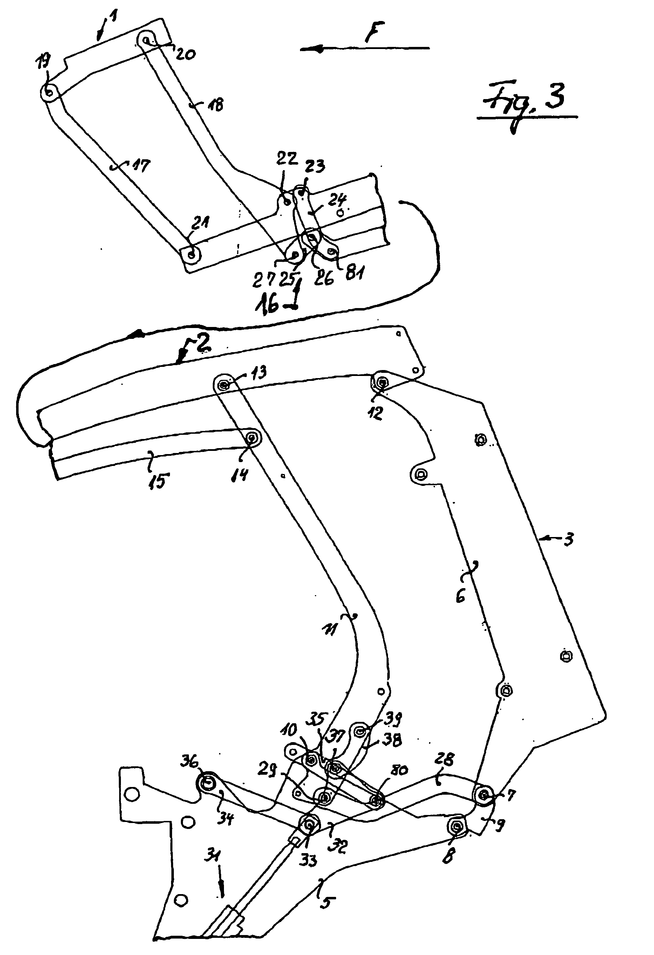

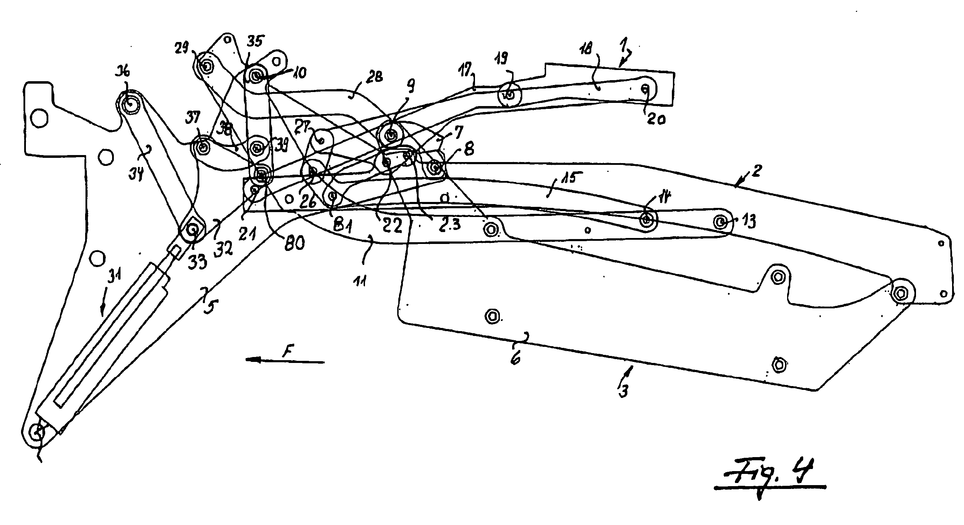

Die Bewegungsabläufe bei der Umstellung des Daches sind, entsprechend den Erläuterungen in der Figurenlegende, aus den Zeichnungen, Fig. 1 bis 4 ersichtlich, in denen entsprechende Bezugszeichen zur Erläuterung eingetragen sind. Die geschilderte Dachkinematik arbeitet insgesamt raumsparend, weiter auch mit günstigen Übersetzungsverhältnissen und damit kraftsparend, und zeigt einen einfachen Lenkeraufbau.

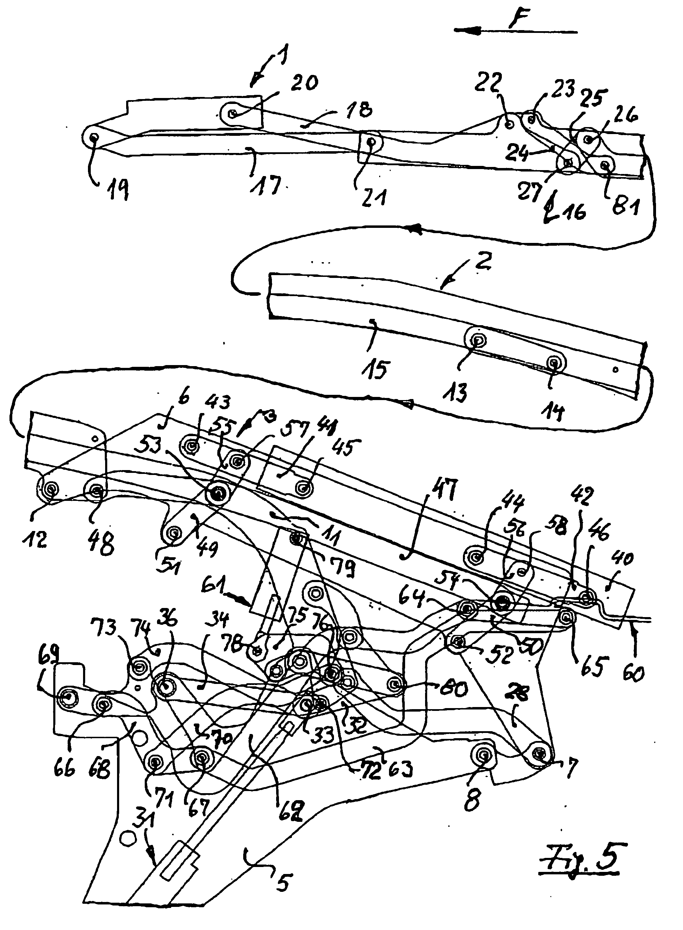

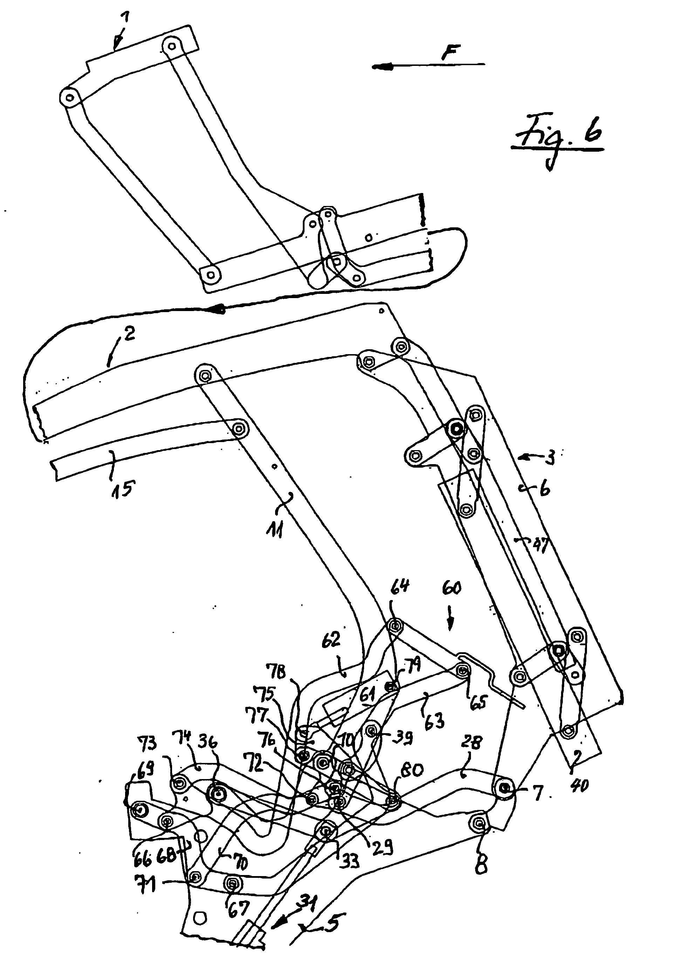

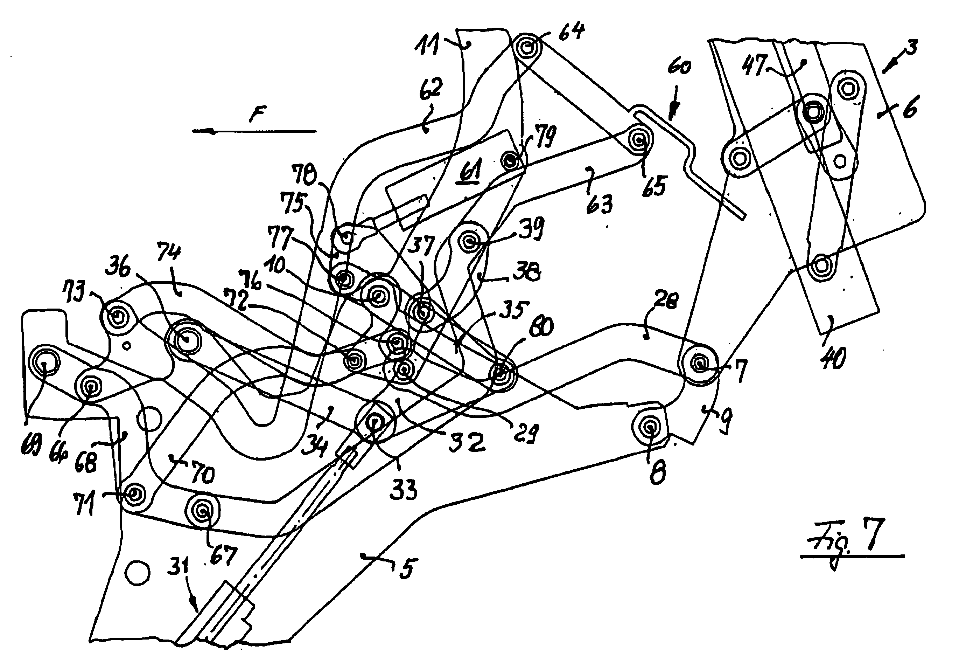

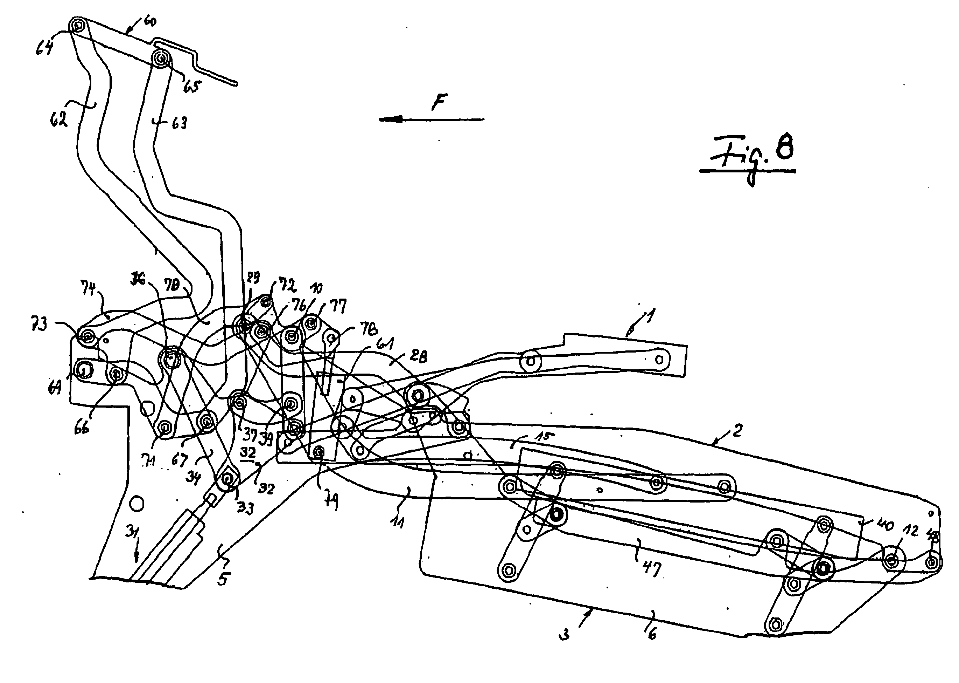

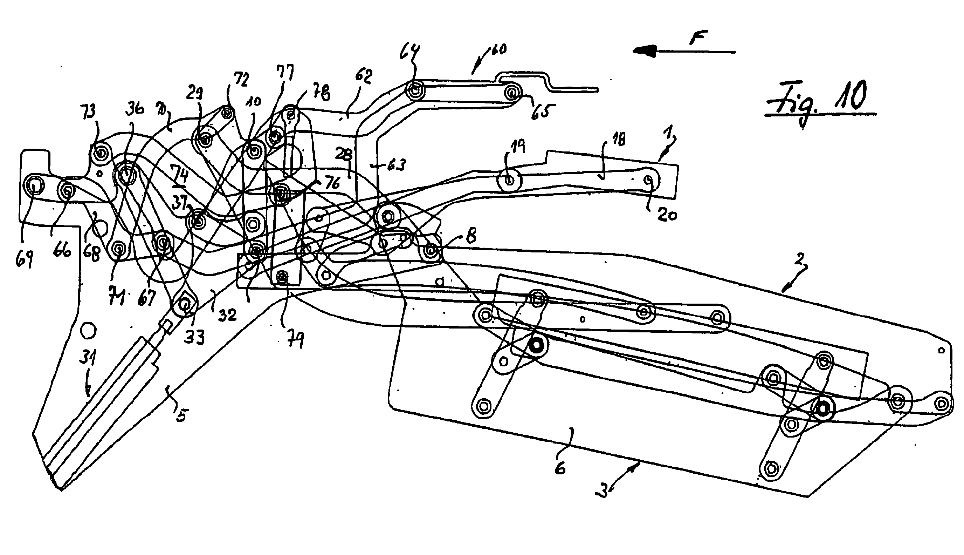

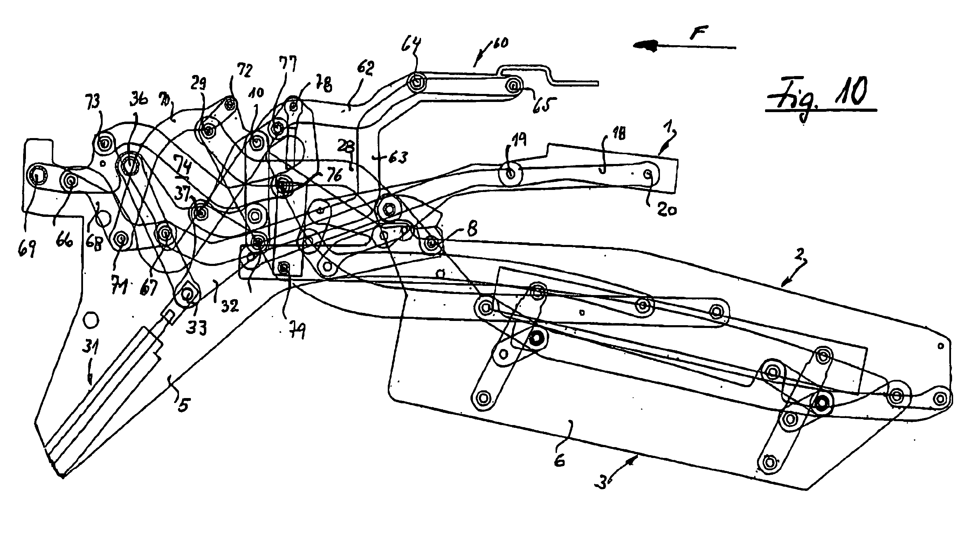

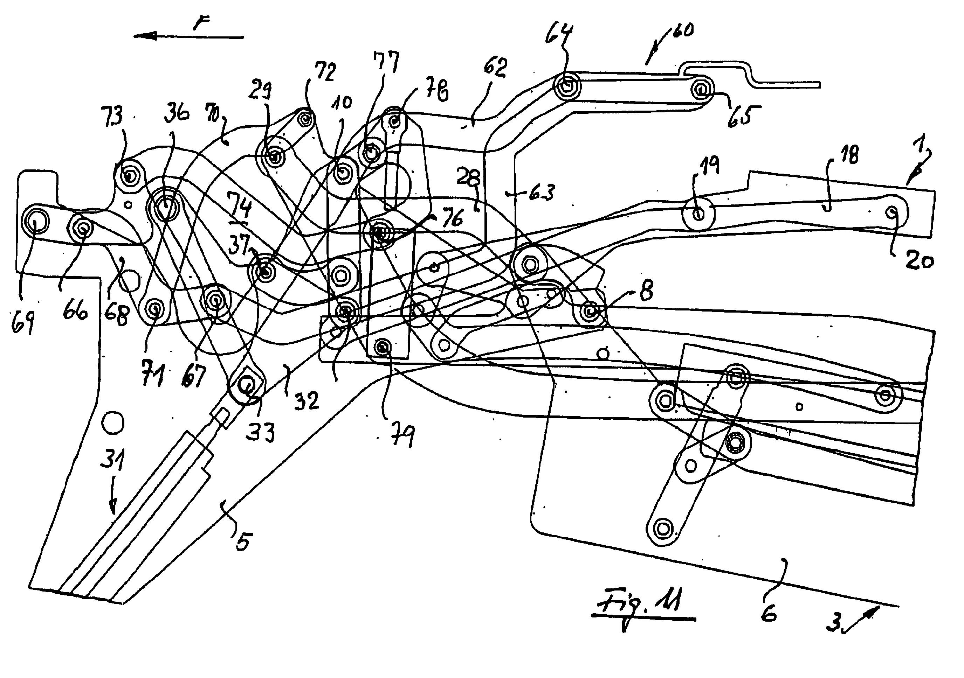

In Fig. 5 und 6 ist die in Verbindung mit der Verlagerung des Daches zwischen Öffnungs- und Schließstellung erfolgende Verstellung der Heckscheibe veranschaulicht, wobei die Heckscheibe lediglich schematisch bei 40 angedeutet ist; ferner ist insbesondere in den nachfolgenden Fig. 7 bis 11 eine Hutablage 60 veranschaulicht mit der zugehörigen Kinematik, über die die Hutablage 60 synchron zur Dachkinematik und dem Dach, ergänzend aber auch gegenüber der Dachkinematik und dem Dach in der Ablagestellung des Dach zu verstellen ist.

Die Heckscheibe 40 ist gegenüber dem jeweiligen C-Säulenlenker 6 über eine Viergelenkanordnung geführt, die als Parallelogrammlenkeranordnung zwei Lenker 41 und 42 aufweist, welche Anlenkpunkte 43 und 44 zum C-Säulenlenker 6 und Anlenkpunkte 45 und 46 zur Heckscheibe 40 bzw. deren Rahmen aufweisen. Die Lenker 41 und 42 erstrecken sich bei geschlossenem Dach im Wesentlichen gleichgerichtet in Längsrichtung des C-Säulenlenkers 6. Eine entsprechende Erstreckung ist für einen Antriebslenker 47 gegeben, der mit dem Mittelteil 2 in einem Anlenkpunkt 48 verbunden ist, der in Längsrichtung des Mittelteiles 2 entgegen der Fahrtrichtung F versetzt zum Anlenkpunkt 12 zwischen C-Säulenlenker 6 und Mittelteil 2 vorgesehen ist. Der Antriebslenker 47 ist gegenüber dem C-Säulenlenker 6 über eine Viergelenkanordnung geführt, die Lenker 49 und 50 umfasst, welche Anlenkpunkte 51, 52 zum C-Säulenlenker 6 aufweisen. Ferner haben die Lenker 49, 50 Anlenkpunkte 53, 54 zum Antriebslenker 47 und es sind mit dem Antriebslenker 47 des Weiteren auch Übertragungslenker 55, 56 schwenkbar verbunden, die ihrerseits in Anlenkpunkten 57, 58 an den mit der Heckscheibe 40 verbundenen Lenkern 41, 42 angreifen. Die Ubertragungslenker 55, 56 sind in Anlenkpunkten mit dem Antriebslenker 47 verbunden, die zur Verringerung des baulichen Aufwandes bevorzugt mit den Anlenkpunkten 53 und 54 der Lenker 49, 50 zusammenfallen.

Bei der Verstellung des Daches zwischen Offnungs- und Schließlage und damit verbundener Verschwenkung der Dachteile gegeneinander führt die Lageveränderung zwischen C-Säulenlenker 6 und Mittelteil 2, wie die Zeichnungen gemäß Fig. 5 und 6 zeigen, zu einer Längsverschiebung des Antriebslenkers 47 gegenüber dem C-Säulenlenker 6, und damit zu einer Verlagerung der dem Antriebslenker 47 zugeordneten Anlenkpunkte 53, 54 der Ubertragungslenker 55, 56, durch die, beim Öffnen des Daches, die Lenker 41, 42 aus ihrer zum C-Säulenlenker 6 im Wesentlichen gleichgerichteten Erstreckungslage in eine Querlage verschwenkt werden, mit dem Effekt, dass die Heckscheibe 40 gegenüber dem C-Säulenlenker 6 rückseitig abgehoben wird. Dies führt in der Ablagestellung mit in Rückenlage befindlichen Heckteil 3 zu einer Verlagerung der Heckscheibe 40 in Richtung auf das darüber liegende Mittelteil 2 mit einem entsprechenden, verringerten Raumbedarf für das Dach in dessen Ablagestellung.

In den Fig. 5 bis 11 ist weiter die bei geschlossenem Dach im hinteren Bereich des Heckteiles 3 untergreifend zu diesem vorgesehene Hutablage 60 veranschaulicht, deren Verstellung, teils synchron zur Dachverstellung, über eine mit der Dachkinematik verbundene Hutablagekinematik erfolgt, wobei die Hutablagenkinematik zur Verstellung der Hutablage gegenüber dem abgelegten Dach einen zusätzlichen Stellantrieb 61 umfasst.

Die Hutablage 60 bildet die Koppel eines Viergelenks, dessen Lenker 62 und 63 mit der Hutablage 60 in Anlenkpunkten 64 und 65 verbunden sind und des Weiteren Anlenkpunkte 66 und 67 zu einem Basislenker 68 aufweisen, der seinerseits einen Anlenkpunkt 69 zur Konsole 5 hat. Der Basislenker 68 ist seinerseits über einen Antriebslenker 70 mit dem Hauptlenker 11 verbunden. Der Antriebslenker 70 weist zum Basislenker 68 einen Anlenkpunkt 71 und zum Hauptlenker 11 einen Anlenkpunkt 72 auf. Ferner ist der Basislenker 68 über einen Abschnitt des zur Hutablage 60 als Koppel führenden Lenkers 62, benachbart zu dessen Anlenkpunkt 66 am Basislenker 68, in einem Anlenkpunkt 73 mit einem Brückenlenker 74 verbunden, der in der Verbindung zum zusätzlichen Stellantrieb 61 liegt und der zu einem Umlenker 75 einen Anlenkpunkt 76 aufweist. Der Umlenker 75 weist einen Anlenkpunkt 77 zum Hauptlenker 11 auf und des Weiteren auch einen Anlenkpunkt 78 zum Stellantrieb 61 in Form eines Stellzylinders, der seinerseits in einem Anlenkpunkt 79 am Hauptlenker 11 angelenkt ist. Bei gleichbleibender Stellung des Stellantriebs 61 ist damit der Anlenkpunkt 76 des Brückenlenkers 74 zum Umlenker 75 und zum Hauptlenker 11 lagefest und es ist der Basislenker 68 kinematisch über die den Antriebslenker 70 und den Brückenlenker 74 umfassende Lenkerkette mit dem Hauptlenker 11 verkoppelt.

Dadurch wird bei der Ablagebewegung des Daches in die Ablagestellung, wie die Zeichnungen gemäß Fig. 5 bis 11 zeigen, die Hutablage 60, gekoppelt an die Bewegung des Daches, zunächst bis in eine Lage verschwenkt, die der den Zugang zum Ablageraum des Daches freigebenden Ausgangs- oder Grenzlage entspricht, wenn das Dach aus seiner Ablagestellung in seine Schließstellung überführt wird.

Die Hutablage wird also beim Öffnen und Schließen des Daches, bis zur angesprochenen Grenzstellung beim Öffnen und ausgehend von dieser Grenzstellung beim Schließen des Daches, über die Kopplung zur Dachkinematik verstellt. Die angegebene Grenzstellung der Hutablage entspricht einer Lage, in der die Hutablage keine Behinderung für den Durchgang des Daches mehr darstellt. Innerhalb des Verstellbereiches der Hutablage zwischen der jeweiligen Betriebslage - bei geöffnetem oder bei abgelegtem Dach - und der den Durchgang des Daches ermöglichenden Grenzstellung erfolgt die Verstellung der Hutablage - bei in Ablagestellung befindlichem Dach, durch den separaten Stellantrieb 61 für die Hutablage 60, der nur der Verstellung der Hutablage 60 dient, damit auf verhältnismäßig kleine Verstellbereiche ausgelegt sein kann und dem entsprechend auch keinen hohen Anforderungen ausgesetzt ist.

## Patentansprüche

1. Mehrteiliges Dach für Fahrzeuge mit offenem Aufbau, das ein Vorderteil (1), ein Mittelteil (2) und ein Heckteil (3) aufweist, bei dem das Vorderteil (1), das Mittelteil (2) und das Heckteil (3) über eine Dachkinematik tragend und verstellbar zur Karosserie abgestützt sind sowie in ihrer Ablagestellung bei geöffnetem Dach ein Dachteilpaket bilden, in dem bei gleichsinniger Ausrichtung das Vorderteil (1) das Mittelteil (2) bei oben liegender Dachaußenseite überlagert und das Mittelteil in Überdeckung zum in Rückenlage liegenden Heckteil (3) liegt, wobei die Dachkinematik mehrere Viergelenke umfasst, von denen ein erstes Viergelenk karosserieseitig angelenkt und Träger des Heckteiles (3) und des Mittelteiles (2) ist, die bei das Heckteil (3) tragendem hinteren Lenker des ersten Viergelenks mit aneinander anschließenden Seiten desselben verbunden sind, von denen ein zweites Viergelenk als Verbindung zwischen dem Mittelteil (2) und dem Vorderteil (1) vorgesehen ist, die mit gegenüberliegenden Seiten dieses Viergelenks verbunden sind, und von denen ein drittes Viergelenk als Antriebsverbindung zwischen dem ersten Viergelenk und dem zweiten Viergelenk vorgesehen ist, sich längs des Mittelteiles (2) erstreckt und mit seinem Stelllenker (15) als Antriebslenker einerseits am vorderen, angetriebenen Lenker als Hauptlenker (11) des ersten Viergelenks im Übergang zwischen dessen karosserieseitigem Anlenkpunkt (10) und dessen dachseitigem Anlenkpunkt (13) angelenkt ist und andererseits mit einem Fortsatz des anzutreibenden Lenkers (18) des zweiten Viergelenks verbunden ist, der sich über seinen Anlenkpunkt (22) am Mittelteil (2) hinaus erstreckt, wobei von den zur Karosserie angelenkten Lenkern des ersten Viergelenks einer in seinem Anlenkpunkt zur Karosserie in Abhängigkeit von der Schwenklage des anderen Lenkers lageveränderlich ist,
**dadurch gekennzeichnet,**
**dass** in der Antriebsverbindung des Stelllenkers (15) als Antriebslenker des dritten Viergelenks zum zweiten Viergelenk ein Fünfgelenk als Vorgelege (16) vorgesehen ist und dass von den Lenkern des ersten Viergelenks der Anlenkpunkt des hinteren Lenkers als C-Säulenlenker (6) zur Karosserie lageveränderlich ist.

## Claims

1. Roof in multiple parts for vehicles with an open body, the roof having a front part (1), a central part (2) and a rear part (3), in which the front part (1), the central part (2) and the rear part (3) are supported in a load-bearing and adjustable manner with respect to the vehicle body via roof kinematics and, in their storage position when the roof is open, form a package of roof parts, in which, with the parts oriented in the same direction, the front part (1) lies above the central part (2), with the outside of the roof upwards, and the central part overlaps with the rear part (3) which lies on its back, wherein the roof kinematics comprises a plurality of four-bar linkages, of which a first four-bar linkage is coupled on the vehicle body and is a support of the rear part (3) and of the central part (2), which parts are connected to adjoining sides of the first four-bar linkage with the rear link of the same supporting the rear part (3), of which a second four-bar linkage is provided as the connection between the central part (2) and the front part (1), which parts are connected to opposite sides of this four-bar linkage, and of which a third four-bar linkage is provided as the driving connection between the first four-bar linkage and the second four-bar linkage, extends along the central part (2), and, firstly, by means of its adjusting link (15) as the driving link, is coupled to the front, driven link as the main link (11) of the first four-bar linkage in the transition between its coupling point (10) on the vehicle body and its coupling point (13) on the roof, and, secondly, is connected to an extension of the link (18), which is to be driven, of the second four-bar linkage, which link extends beyond its coupling point (22) on the central part (2), and wherein, of the links of the first four-bar linkage, which links are coupled to the vehicle body, the coupling point of one to the vehicle body can be varied in position as a function of the pivot position of the other link, **characterized in that** a five-bar linkage is provided as a reduction gear (16) in the driving connection of the adjusting link (15), as the driving link of the third four-bar linkage, to the second four-bar linkage, and **in that**, of the links of the first four-bar linkage, the coupling point of the rear link, as the C pillar link (6), can be changed in position with respect to the vehicle body.

## Revendications

1. Toit en plusieurs parties pour véhicules ayant une structure ouverte, présentant une partie avant (1), une partie centrale (2) et une partie arrière (3), dans lequel la partie avant (1), la partie centrale (2) et la partie arrière (3) s'appuient par une cinématique de toit sur la carrosserie de manière à assurer un portage et de manière réglable et constituent également, dans leur position de rangement, lorsque le toit est ouvert, un ensemble de parties de toit, dans lequel, avec une orientation dans le même sens, la partie avant (1) recouvre la partie centrale (2), la face extérieure du toit étant située en haut, et la partie centrale recouvre la partie arrière (3) se trouvant en position reculée, la cinématique de toit comprenant plusieurs bras articulés quadruples dont un premier bras articulé quadruple s'articule au niveau de la carrosserie et est porteur de la partie arrière (3) et de la partie centrale (2), qui sont reliées par le biais de bielles arrière supportant la partie arrière (3) du premier bras articulé quadruple à des côtés se raccordant entre eux de celui-ci, dont un deuxième bras articulé quadruple est prévu comme liaison entre la partie centrale (2) et la partie avant (1), qui sont reliées à des côtés opposés de ce bras articulé quadruple, et dont un troisième bras articulé quadruple est prévu comme liaison motrice entre le premier bras articulé quadruple et le deuxième bras articulé quadruple, s'étend le long de la partie centrale (2) et s'articule d'une part par sa bielle de réglage (15) faisant office de bielle motrice avec la bielle avant menée faisant office de bielle principale (11) du premier bras articulé quadruple au niveau de la transition entre son point d'articulation au niveau de la carrosserie (10) et de son point d'articulation au niveau du toit (13) et est relié d'autre part à un prolongement de la bielle à entraîner (18) du deuxième bras articulé quadruple qui s'étend au-delà de son point d'articulation (22) sur la partie centrale (2), une des bielles articulées avec la carrosserie du premier bras articulé quadruple pouvant changer de position au niveau de son point d'articulation par rapport à la carrosserie en fonction de la position de pivotement de l'autre bielle,
**caractérisé en ce que**,
dans la liaison motrice de la bielle de réglage (15) faisant office de bielle motrice du troisième bras articulé quadruple avec le deuxième bras articulé quadruple, il est prévu un bras articulé quintuple faisant office de transmission primaire (16) et **en ce que** le point d'articulation de la bielle arrière faisant office de bielle de montant arrière (6) peut être changé de position par rapport à la carrosserie par les bielles du premier bras articulé quadruple.
